# EUROPEAN PATENT SPECIFICATION

(11) **EP 3 116 149 B1**
(45) Date of publication and mention of the grant of the patent: **27.07.2022**
(21) Application number: 15175684.8
(22) Date of filing: 07.07.2015
(51) Int. Cl.: H04H 60/43, H04N 21/434

(54) **METHOD FOR DETERMINING A LIST OF IDENTIFIERS OF CHANNELS TO BE DISPLAYED ON A DISPLAY SERVICE**
VERFAHREN ZUR BESTIMMUNG EINER LISTE VON AUF EINEM ANZEIGEDIENST ANZUZEIGENDEN IDENTIFIKATOREN VON KANÄLEN
PROCÉDÉ DE DÉTERMINATION D'UNE LISTE D'IDENTIFIANTS DE CANAUX DEVANT ÊTRE AFFICHÉE SUR UN ÉCRAN DE SERVICE

(43) Date of publication of application: 11.01.2017
(73) Proprietor: Orange Belgium, 1140 Bruxelles (Evere) (BE)
(72) Inventor: Parvais, Thomas, 1140 Bruxelles (BE); Pirson, Vincent, 1140 Bruxelles (BE)
(74) Representative: Gevers Patents

(56) References cited:
- EP-A2- 1 995 953
- WO-A1-2011/161582
- US-A1- 2014 044 219

## Description

### Field of the invention

The invention relates to a method for determining a list of identifiers of channels to be displayed on a display device. More precisely, the invention relates to a method for automatic selection of channels broadcasted according to the Digital Video Broadcasting (DVB) standard.

### Background of the invention

Signal for digital television are encoded in such a way that several TV channels can be transmitted on the same transmission medium like a cable or a radio antenna (satellite or terrestrial). The Digital Video Broadcasting (DVB) standard is broadly used for that purpose. At the place where the television (or the display) is watched, the transmitted signal are decoded in a decoder.

The determination of the list of TV channels to be displayed by the display requires the knowledge of several DVB parameters, which depends on the location of the display, on the owner of the transmission medium like the cablo-operator, on the service provider, which can be a cable virtual network operator, on the quality of the transmission medium, like optical fibre or coaxial cable, on the contract between the user and the service provider, on the television channels that the user wants in the first positions in his list of television channels, on the administrative district of the television since television channels may be local,...

Often, a user who has to set up his decoder does not have access to these parameters and a technician has to come to the place of the television to set-up the decoder, which is expensive. Alternatively, it is asked to the user that he inputs such parameters at the installation of his decoder. It is extremely cumbersome because the user has to find all these technical parameters at various places without understanding their meaning. The user then often calls the call-center of the service provider, what the user does not like and what is expensive for the service provider.

The document WO2011/161582 discloses a method for performing a channel installation in a television receiver. In this method, based on a geographic location of the television receiver, the homing frequency associated with a cable operator is obtained, for example, from a database. The tuner of the television receiver is then tuned to the homing frequency to obtain a plurality of Network ID's. The Network ID that is predominantly used substantially at and around the geographic location of the television receiver is then selected. The next steps of the channel installation are then performed base on this Network ID.

### Summary of the invention

It is therefore an object of the present invention to provide a user-friendly method for determining a list of identifiers of channels, the channels identified by said identifiers being the channels to be displayed on a display device.

This aim is achieved according to embodiments of the invention.

In accordance with one aspect of the present invention, there is provided a method according to claim 1.

In an embodiment of the invention, step (i) includes receiving data corresponding to a ZIP-code through a user interface.

In an embodiment of the invention, the method further includes receiving data corresponding to a choice of language for channel listing, wherein the parameter values corresponding to the ZIP-code include a parameter value related to the choice of language for channel listing, and wherein the determining of the list of identifiers of channels includes an arrangement of the identifiers of channels in accordance with the choice of language for channel listing.

The parameters that relate to the preference of the user for the channel list cannot systematically be deduced from the ZIP-code and a user can enter his preference, or choice, in terms of language for channel listing in the device, which is used to determine parameter values. This method provides an efficient channel listing.

In accordance with a second aspect of the present invention, there is provided a non-transitory computer readable medium according to claim 4.

This non-transitory computer readable medium can be provided, for example, in the device connectable to a source of encoded video signal and a display. It can automatically perform any of the embodiments of the method according to the invention.

In accordance with a third aspect of the present invention, there is provided a decoder according to claim 5.

The decoder is usable with various operators, different configurations within one operator and/or different configurations within one Cable Virtual Network Operators (CVNO) that uses transmission mediums from various operators. This represents a huge gain in money with respect to the known decoders that have to be adapted (in hardware and/or software) for each configuration and/or each operator and that cannot perform automatic selection of parameters if several configurations are used within one CVNO that uses transmission mediums from various operators.

The decoder automatically performs the method(s) according to the invention that efficiently handles the cases where the ZIP-code corresponds to several sets of service information tables on the relevant network.

### Brief description of the drawings

For a better understanding of the present invention, reference will now be made, by way of example, to the accompanying drawings in which:
Figure 1 illustrates a situation where a Cable Virtual Network Operators (CVNO) uses cables of a first cablo-operator to provide services to a first client and cables of a second cablo-operator to provide services to a second client.
Figure 2 represents a scheme of the DVB standard.
Figure 3 illustrates an embodiment of the invention where a bouquet is allocated to a CVNO.
Figure 4 illustrates a case where a CVNO provides telecom services to a territory covered by several cablo-operators.
Figure 5 schematizes a path of a signal from a capture of an image by a camera to the appearance of an image, a sound and possibly other output corresponding to the captured image.
Figure 6 schematizes a decoder.
Figure 7 illustrates a specific selection table according to an embodiment of the invention.
Figure 8 illustrates a sequence of steps corresponding to an installation of a decoder.
Figure 9 illustrates an automatic determination of ZIP-code and listing language preference according to an embodiment of the present invention.
Figure 10 illustrates a set-up of a decoder occurring during an installation of a decoder.
Figure 11 illustrates a determination of a list of channel identifiers as performed according to the present invention.

### Description of the invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

In the following description, an element which is identical to those in other figures is referred to by the same reference numeral.

In the following description, elements that have reference numbers that follow each other may be referred to by the extreme reference numbers. For example, the reference 231-234 means the elements 231, 232, 233 and 234.

Although the specific embodiments of the present invention have been described above, it will readily be understood that the invention is not limited to such embodiments.

As used herein, a "DVB standard" can be a standard or a group of several standards amongst, for example, the following standards or their successors: ETSI TS 101 197, ETSI TS 103 197, ETSI EN 300 468, ISO/IEC 13818-2, ISO/IEC 13818-3.

As used herein, a DVB signal is a video signal encoded according to the DVB standard.

As used herein, a Cable Virtual Network Operators (CVNO) is a service provider for services, especially TV services, through cables who does not own the cables through which the services reach his clients, but uses cables belonging to cablo-operators.

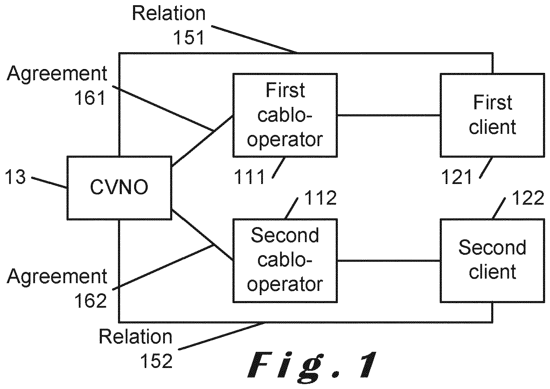

Figure 1 illustrates a situation where a CVNO 13 uses cables of a first cablo-operator 111 to provide services to a first client 121 and cables of a second cablo-operator 112 to provide services to a second client 122.

The cablo-operators 111, 112, the users 121, 122 and the CVNO 13 interact in the following way. The first cablo-operator 111 owns the cables which are provided up to the building of the first user 121. The second cablo-operator 112 owns the cables which are provided up to the building of the second user 122. The user 121 has a first client-service provider relation 151 with the CVNO 13. The user 122 has a second client-service provider relation 152 with the CVNO 13. The users 121, 122 install each a decoder provided by the CVNO 13 and the CVNO 13 provides telecom services that may include audio-video services like digital TV, multimedia content and internet broadband services to the users 121, 122. The decoder will be described later. The CVNO 13 has a first agreement 161 with the first cablo-operator 111 on the use of the cablo-operator's cables to transport data for the telecom services until the building of the user 121. The CVNO 13 has a second agreement 162 with the second cablo-operator 112 on the use of the cablo-operator's cables to transport data for the telecom services until the building of the user 122. In some embodiments of the invention, the agreements 161, 162 include one or more clauses concerning the selection of telecom services, like television channels, which the CVNO 13 provides to their users, concerning the flows of data on the cables owned by the cablo-operators 111, 112 according to the Digital Video Broadcasting (DVB) standard, and especially concerning the way this selection of services is technically encoded in the systems of the cablo-operators 111, 112.

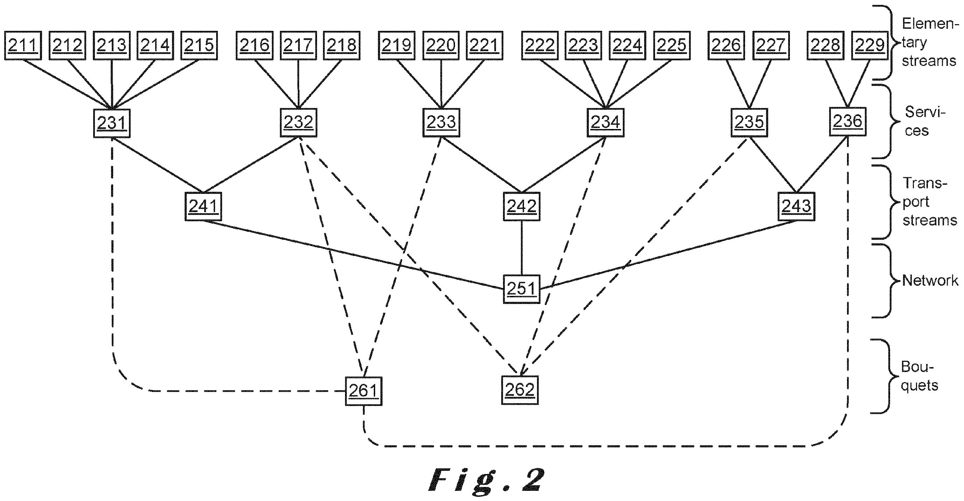

Figure 2 represents a scheme of the DVB standard at a given location. In the DVB standard, a TV program or TV channel, called a service 231-236, comprises several elementary streams 211-229. In the following, the words "channel" and "service" in the context of DVB are equivalent. For example, the service 231 comprises an elementary stream 211 for the video component, an elementary stream 212 for the audio component, an elementary stream 213 for the French subtitle, an elementary stream 214 for the English subtitle and an elementary stream 215 for data stream. The number of elementary streams for a service can vary with time, for example if a service (a show on a TV channel) has subtitles and the next service has no subtitles. Each elementary stream is identified by a Packet Identifier (PID). Each elementary stream is a packetized in MPEG-2-TS format of 188 Bytes containing MPEG-2 or MPEG-4 encoded audio, video or binary data. Services 231-236 are grouped in transport streams 241- 243. A transport stream may be a mix of MPEG-2 or MPEG-4 encoded or new encoded (H265, High Efficiency Coding) content into the multiple programmes stream. A given transport stream is transferred at a given RF frequency defined by DVB system information (SI) tables

A network 251 is a group of transport streams 241-243 and therefore a group of services 231-236. A bouquet 261, 262 is a group of services 231-236 that do not necessarily belong to the same transport stream(s). For example, the bouquet 261 groups the services 231, 232, 233 and 236 and the bouquet 262 groups the services 232, 234 and 235.

The word "network" as used herein has its specific meaning in the frame of the DVB standard and corresponds thus to a group of transport streams in the DVB standard, except if specified otherwise or clear within the context.

The DVB standard uses Service Information (SI) tables. These tables are included at a predetermined place in a predetermined elementary stream for any DVB signal, in such a way that a device reading the DVB signal at the right frequency ,at the right symbol rate and modulation scheme can directly locate the service information tables. In a network, all the transport streams share some service information tables. A first service information table is a Network Information Table (NIT). A network information table of the network 251 describes the organization of transport streams 241, 242, 243 within the network 251, describes some of the physical properties of the network and provides information about the services 231-236 of the network 251. The NIT includes the following information:
- Network ID.
- Table ID.
- For each transport stream:
   ∘ A list of services included in the transport stream, each service having a service ID.
   ∘ RF parameters associated with the transport stream that are necessary information for a decoder to find and then decode the transport stream. These parameters may include a descriptor tag, a frequency, parameters related to forward error correction (FEC), a parameter related to modulation and a symbol rate.
   ∘ A logical channel descriptor that links each service to a logical channel number, which is the channel number commonly presented on the TV screen and used by the TV users.
   ∘ Possibly a user-defined descriptor that can, for example, be used instead of the logical channel descriptor to link each service to a logical channel number.

The content of the NIT in a given network can change between user locations, for example because of local TV channels, or because another location corresponds to another transponder that requires other RF parameters.

Since the NIT comprises the name of the network and the network ID, the term NIT may be used while meaning the network itself.

A NIT can be a NIT-actual or a NIT-other. While there is only one NIT-actual for a given network, there can be several NIT-others for a network. All NITs in a network, including the NIT-actual and all the possible NIT-others, have a different network ID. As used herein, a NIT is a NIT-other. A NIT-actual is a service information table. A NIT-other is a service information table

Another SI table is a Bouquet Association Table (BAT). A BAT for the bouquet 261 describes the services 231, 232, 233, 236 in the bouquet 261. The BAT includes the following information:
- Bouquet ID.
- Table ID.
- For each transport stream:
   ∘ The transport stream ID.
   ∘ A list of services included in the transport stream, each service having a service ID.
   ∘ A logical channel descriptor that links each service to a logical channel number, which is the channel number commonly used by TV users.
   ∘ Possibly a user-defined descriptor that can, for example, be used instead of the logical channel descriptor to link each service to a logical channel number.

The content of the BAT is usually constant and refers to Transport stream and services themselves. The BAT is, in this way, similar to an SDT table (Service Definition Table) since the BAT does not refer to network ID itself by default.

Since the BAT comprises the name of the bouquet and the bouquet ID, the term BAT may be used while meaning the bouquet itself.

If the first cablo-operator 111 and the CVNO 13 in figure 1 provide services in a same geographical region through the same cables and through the same network, a first NIT-other can include the list of channels provided by the first cablo-operator 111 and a second NIT-other can include the list of channels provided by the CVNO.

As used herein, a list of channels can mean a list of channel identifiers. A list of channels or a list of channel identifiers preferably include additional information on top of the channels, channel names or channel identifiers, like information that are sufficient to locate each channels of the list in the DVB signal.

In an embodiment of the invention, a single NIT-other is allocated to the CVNO 13. A "single NIT-other " means a single NIT-other ID but the content of the NIT-other may vary, for example because some TV channels are local.

The NIT-other allocated to the CVNO includes only the services provided by the CVNO 13. The NIT-other provides the services available locally. The content of the NIT-other differs according to the location of the user 121, 122 in figure 1. The NIT-other is adapted locally, by the first cablo-operator 111 and/or the CVNO 13 -if the control is possible-, to include the services of a local frequency plan or per region if the territory covered by the first cablo-operator 111 includes several regions, a frequency plan being a list of transport streams and/or services as function of the frequency. A frequency plan corresponds to a given geographic area in such a way that a geographical location corresponds to a single frequency plan. A region can substantially correspond to a province.

In an embodiment of the invention, when a channel is available in a high definition version (HD) and a standard definition version (SD), both versions are present in the channel list of the NIT-other of the CVNO

In another embodiment of the invention, to avoid repetition of channels if a channel is available in high definition (HD) and standard definition (SD), only the HD version is present in the channel list of the NIT-other of the CVNO focusing on HD content delivery ( new HD enabled STB).

In an embodiment of the invention, the NIT-other includes the highest possible number of channels available in its corresponding area.

In an embodiment of the invention, a list of services in the NIT-other is generated per region and some services may be blocked by the decoder of the first user 121, for example via a conditional access system that blocks access to non-authorized channels. This embodiment can be used, for example, when a local headend covers more than one specific area and multiple local services are present to cover multiple local zones. The decoder of the first user 121 selects the relevant local services based on input information including the ZIP-code provided by the first user 121 as will be described later.

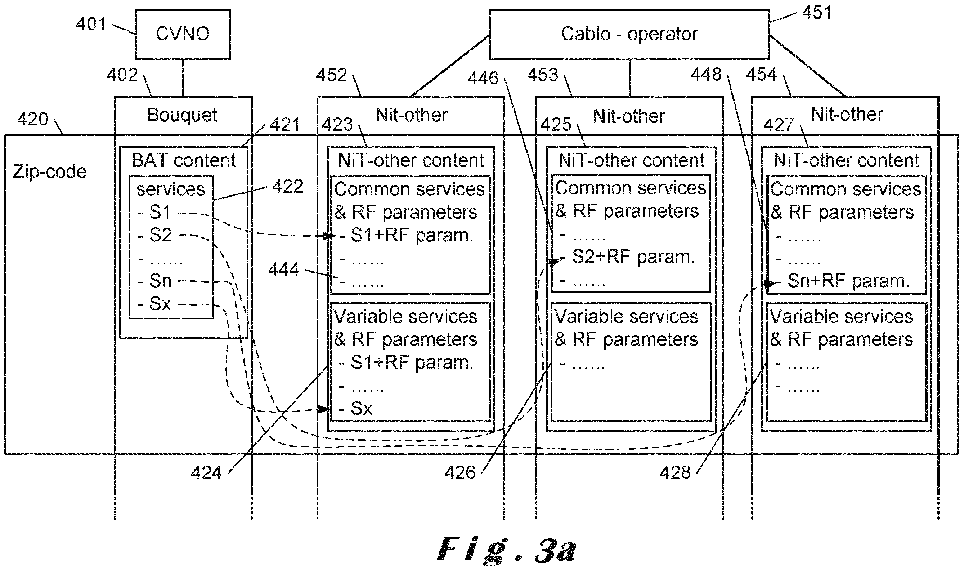

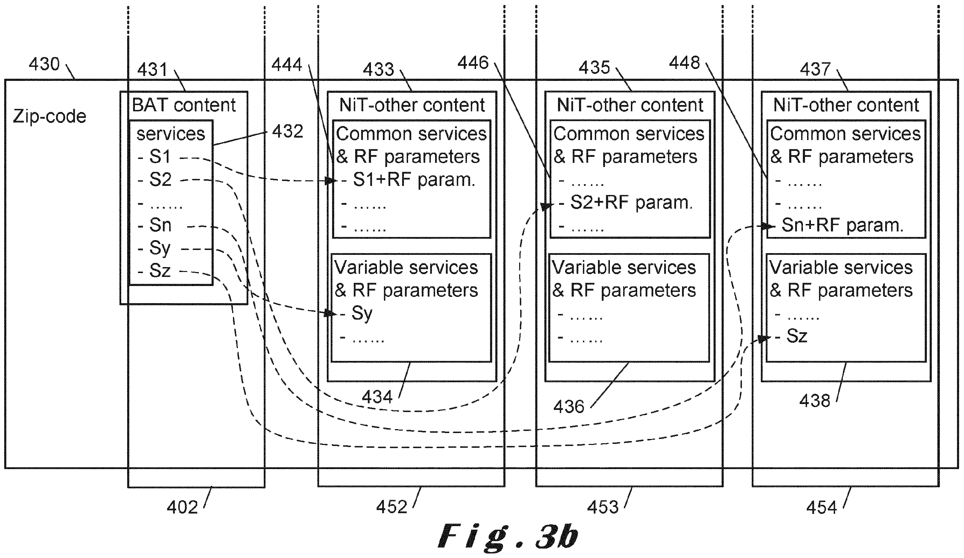

Figure 3 illustrates an embodiment of the invention where one bouquet 402 is allocated to a CVNO 401 and where several NIT-others 452, 453, 454 depend on a cablo-operator 451. In another embodiment of the invention, several bouquets are allocated to the CVNO 401. For clarity, Figure 3 is split into two pages into Figure 3a and Figure 3b that have to be placed on top of each other.

A ZIP-code 420 corresponds to a BAT content 421, which includes a list of services 422 comprising services S1, S2, ..., Sn and Sx. The NIT-other 452 corresponds, for the ZIP-code 420, to the NIT-other content 423, which includes a list of common services 444 with the RF parameters corresponding to these services and a list of variable services 424 with the RF parameters corresponding to these services. The NIT-other 453 corresponds, for the ZIP-code 420, to the NIT-other content 425, which includes a list of common services 446 with the RF parameters corresponding to these services and a list of variable services 426 with the RF parameters corresponding to these services. The NIT-other 454 corresponds, for the ZIP-code 420, to the NIT-other content 427, which includes a list of common services 448 with the RF parameters corresponding to these services and a list of variable services 428 with the RF parameters corresponding to these services. Preferably, all the services of the list of services 422 of the BAT content 421 are present in one of the lists of services 424, 444, 426, 446, 428, 448 of the NIT-other contents 423, 425, 427 corresponding to the ZIP-code 420.

A ZIP-code 430 corresponds to a BAT content 431, which includes a list of services 432 comprising services S1, S2, ..., Sn, Sy and Sz. The NIT-other 452 corresponds, for the ZIP-code 430, to the NIT-other content 433, which includes the list of common services 444 with the RF parameters corresponding to these services and a list of variable services 434 with the RF parameters corresponding to these services. The NIT-other 453 corresponds, for the ZIP-code 430, to the NIT-other content 435, which includes the list of common services 446 with the RF parameters corresponding to these services and a list of variable services 436 with the RF parameters corresponding to these services. The NIT-other 454 corresponds, for the ZIP-code 430, to the NIT-other content 437, which includes the list of common services 448 with the RF parameters corresponding to these services and a list of variable services 438 with the RF parameters corresponding to these services. Preferably, all the services of the list of services 432 of the BAT content 431 are present in one of the lists of services 434, 436, 438, 444, 446, 448 of the NIT-other contents 433, 435, 437 corresponding to the ZIP-code 430.

The common services 444, 446, 448 do not depend on the location, and thus on the ZIP-code, and mainly include broadcast channels. The variable services 424, 434, 426, 436, 428, 438 depend on the location, and thus on the ZIP-code and mainly include local channels.

The ZIP code & associated frequency plan correlate with the Network ID available on the HFC network.

In an embodiment of the invention, the bouquet 402 includes only Standard Definition (SD) channels and the bouquet 402 includes by priority HD version of the channels if available and SD version of the other channels. Like that, a channel is never present in a bouquet in its HD and in its SD version. It is advantageous for the user because he receives the channels only once and he always receives the channels in the highest quality. It is advantageous for the CVNO because the list of channels in the BAT is shorter than if channels were included in SD and in HD in the BAT. In an embodiment of the invention, another bouquet including HD channels is similar to the bouquet 402 with only SD channels wherein the channels available in HD are swapped. If channels in Ultra HD format are available, a third BAT can be put in place or these channels can be placed in the BAT with the HD channel in such a way to always have a BAT with all channels of highest quality.

In an embodiment of the invention, to avoid repetition of channels if a channel is available in high definition (HD) and standard definition (SD), only the HD version is present in the channel list of the BAT or in the channel list of one of the BATs.

In an embodiment of the invention, the BAT includes the highest possible number of channels available in its corresponding area.

In an embodiment of the invention, the bouquet 402 includes only the channels provided by the CVNO 13. The BAT provides the channels available locally. The content of the BAT differs according to the location of the user. The BATs are adapted locally to reflect the presence of HD versions of channel or not.

In an embodiment of the invention, a frequency plan is locally defined according to the local status of the HFC (Hybrid Fiber Coax) network: High Definition enabled, frequency upgraded, bidirectional. Most of the ZIP-code regions correspond to a single frequency plan, but not all. It can happen that, for example because cable networks of several status are present in a ZIP-code region, several frequency plans are present in this ZIP-code region.

In an embodiment of the invention, a frequency plan geographic area corresponds to a single NIT

In an embodiment of the invention, if several frequency plans correspond to a same ZIP-code, the ZIP-code region is divided into sub-regions in such a way that a geographical location corresponds to a single frequency plan and a single BAT and /or NIT content.

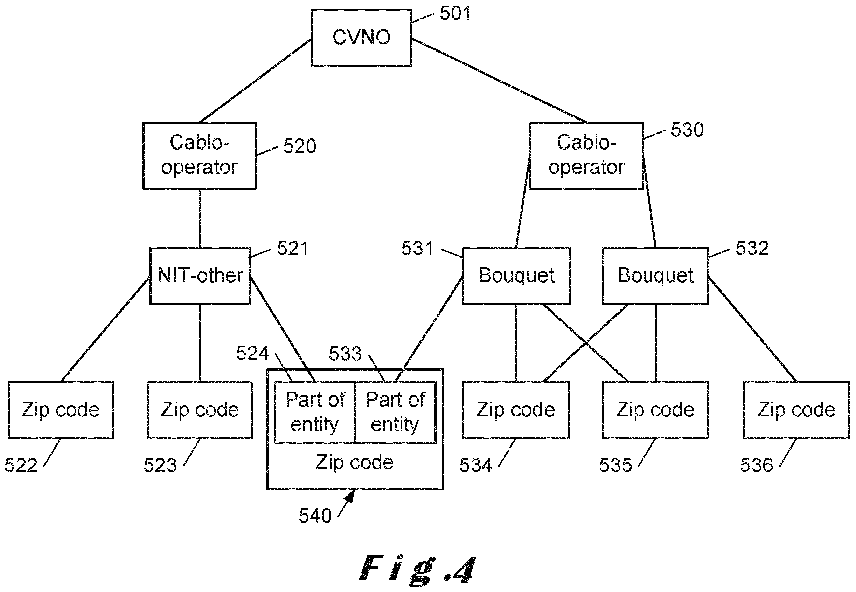

Figure 4 illustrates a case where a CVNO 501 provides telecom services to a territory covered by several cablo-operators 520, 530. Cablo-operator 520 allocates a NIT-other 521 to the CVNO 501. Cablo-operator 530 allocates two bouquets 531, 532 to the CVNO 501. ZIP codes 522 and 523 correspond only to the cablo-operator 520 and thus to the NIT-other 521. ZIP codes 534 and 535 correspond only to the cablo-operator 530 and to the bouquets 531 and 532. ZIP code 536 corresponds only to the cablo-operator 530 and to the bouquet 532. The area of ZIP code 540 has cables belonging to both cablo-operators 520 and 530. A part 524 of the area of ZIP code 540 corresponds to cablo-operator 520 and thus to the NIT-other 521. A part 533 of the area of ZIP code 540 corresponds to cablo-operator 530 and to the bouquet 531.

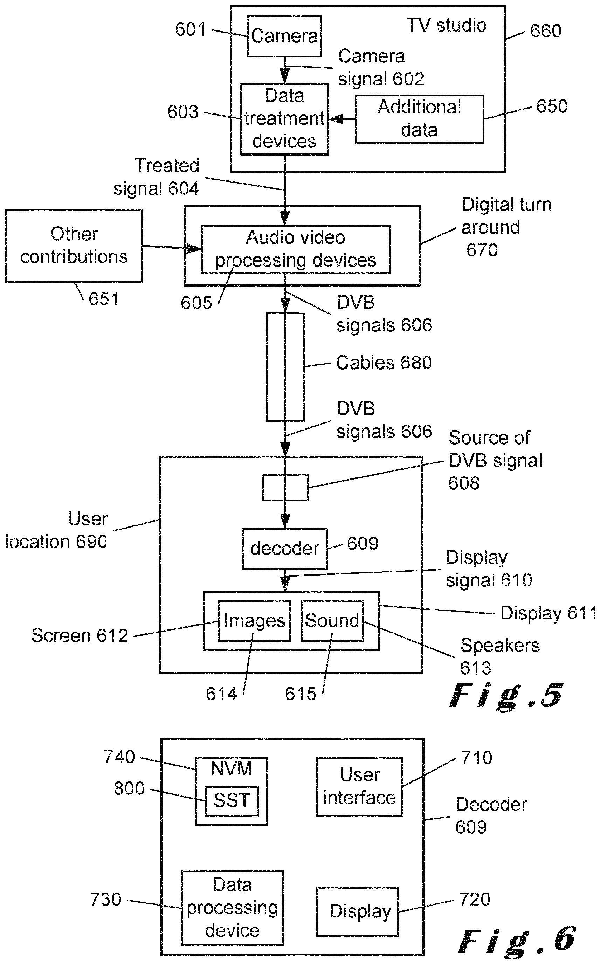

Figure 5 schematizes a path of a signal from capturing information with a camera 601 to the appearance of an image 614, a sound 615 and possibly other output. At a first location 660, typically a TV studio, the camera 601 records a movie that includes at least one video signal and at least one audio signal.

There can be more than one video signal, for example multiple camera angles or deaf sign translation and more than one audio signal, for example stereo signal or multiple languages. Camera 601 outputs a camera signal 602 which includes these video and audio signal and the camera signal is subsequently transferred to one or several data treatment devices 603 . Additional data 650 may also be used as input by the data treatment devices 603. The data treatment devices 603 perform several operations on the camera signal 602 to transform it into a treated signal 604, which is transferred to a digital turn around 670, typically a TV HeadEnd station. Other contributions 651, for example corresponding to several TV channels, are combined in audio video processing devices 605 of the digital turn around 670 to result in a DVB signal 606. The operations performed by the audio video processing devices 605 include encoding according to the DVB standard. Encoding as used herein may include multiplexing and may include encryption. DVB transport streams and service information tables are generated at the location of the audio video processing devices 605 . The DVB signal 606 is transmitted through cables 680 to a user location 690. The transmission through the cables may include a passage through relay transmitters or transponders to amplify the DVB signal 606. At the user location 690, the DVB signal arrives at a source 608 of DVB signal and is transferred through cables to a decoder 609. The decoder 609 transforms the DVB signal or part of the DVB signal 606 into a display signal 610, which is transmitted to a display 611. The display signal 610 may be transmitted through cables. The display signal 610 may be transmitted through a PAL modulator, a Peritel output or an HDMI output. The display signal 610 may have the format of a composite signal for video and analogue signal for audio. The display 611 includes a screen 612 to display images 614 and speakers 613 to emit sound 615. The display 611 is typically a TV. The decoder 609 and the display 611 may be in the same housing.

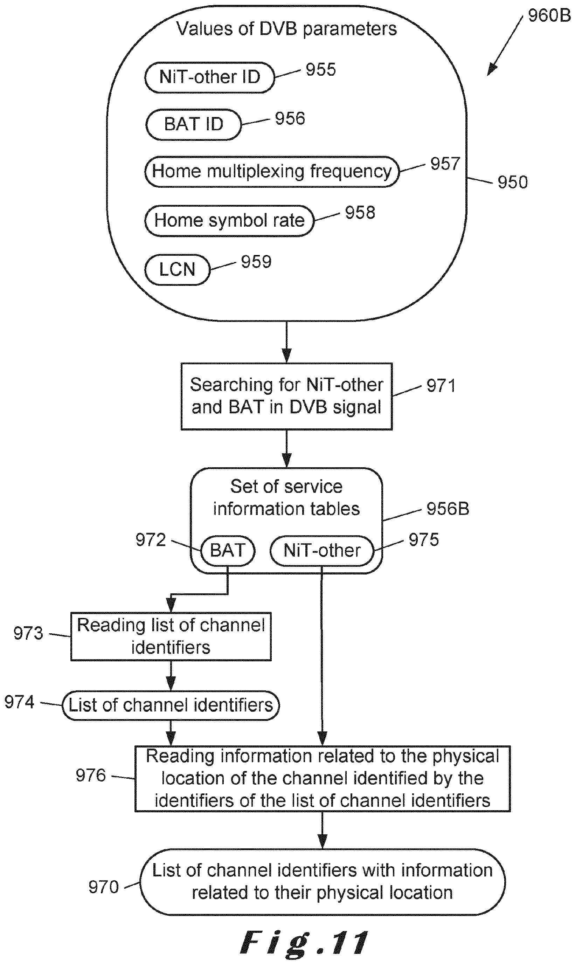

The decoder 609 is schematized at Figure 6. The decoder 609 includes a user interface 710 wherein a user can enter information like his language preference for using the decoder, his listing language preference (also called choice of language for channel listing) and the ZIP-code of the geographic location where is the decoder 609 is located. The listing language preference is the language of the channels the user wants first in the list of channels on the TV. For example, Dutch-speaking and French-speaking channels are broadcasted in Bruxelles. A Dutch-speaking person may want to have the Dutch-speaking channels at the channels 1 to 10 of the TV and the French-speaking channels at the channels 11 to 20. The channel numbers as they appear on the TV are the Logical Channel Number (LCN). A French-speaking person may want to have the French-speaking channels at the channels 1 to 10 of the TV and the Dutch-speaking channels at the channels 11 to 20. The reasons of the entering of the ZIP-code will be explained later referring to Figure 11.

The decoder 609 may include a display 720, for the user to visualize the entered information and to display the name/number of the channel displayed on the TV.. In an embodiment of the invention, the decoder 609 does not include means to connect to Internet.

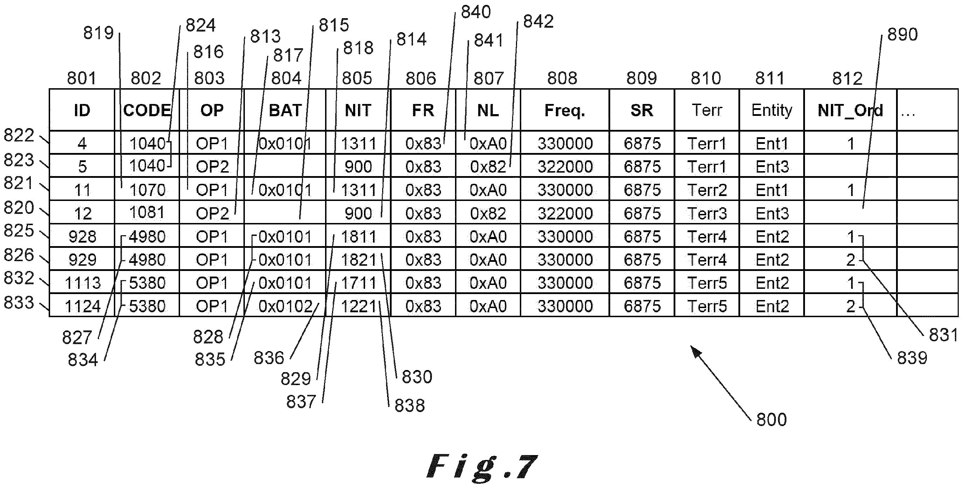

The decoder 609 includes at least one data processing device 730 which transforms the DVB signal into a signal readable by a TV, this signal including TV channels, like HDMI, SCART (PAL). The data processing device 730 performs various operations including decoding the DVB signal or part of the DVB signal, which comprises demultiplexing and decryption. Other operations performed by the data processing device 730 include verification of access rights and channel selection. The decoder 609 includes a non-volatile memory 740 which comprises a specific selection table 800 (SST), which is described in more details with reference to Figure 7. The SST 800 provides relationship information between ZIP-codes and values of parameters related to groups of channels required to decode the signal and to display the channels. In an embodiment of the invention, the SST is integrated in the decoder firmware.

In an embodiment of the invention, the SST is loaded from internet into the memory 740. In an embodiment of the invention wherein the decoder is connected to the internet, the SST is not saved on the memory of the decoder and the decoder accesses the SST through internet.

Referring back to Figure 1, in the client-provider relation 151, 152 between the users 121, 122 and the CVNO 13, the user 121, 122 typically pays a given amount of money to obtain a decoder that he/she installs at his/her geographical location to receive a given list of channels. This list of channels is sometimes called a bouquet even if this bouquet does not always correspond to the bouquets 261, 262 of Figure 2.

The DVB signal, which includes all the channels available on the NIT of the first cablo-operator 111 arrives at the location of the first user 121 through the cables 680 owned by the first cablo-operator 111 (figures 1 and 5).

This DVB signal includes services (or channels) available on the network of the first cablo-operator 111. This DVB signal enters the user location 690 of the first user 121 through the source of DVB signal 608 and enters in the decoder 609. Using the information found in the SST 800, the decoder 609 decodes the DVB signal and selects the channels provided by the CVNO 13 according to the NIT-other corresponding to the network of the first cablo-operator 111 at the user location 690.

The DVB signal, which includes all the channel available on the NIT of the second cablo-operator 112 arrives at the location of the second user 122 through the cables 680 owned by the second cablo-operator 112. This DVB signal includes services (or channels) available on the network of the second cablo-operator 112. This DVB signal enters the user location 690 of the second user 122 through the source of DVB signal 608 and goes in the decoder 609. Using information found in the SST 800, the decoder 609 decodes the DVB signal and selects the channels provided by the CVNO 13 according to the BAT corresponding to the network of the second cablo-operator 112 at the user location 690.

The selection of channels and the decoding of the DVB signal by the decoder requires at least the following information
- if a NIT-other or a BAT has to be used, and
- the NIT-other network ID if a NIT-other has to be used, or the bouquet ID and the network ID, that indicates the NIT-Other table, if a BAT has to be used.

This information is provided by the SST 800 by correspondence information between the ZIP-code entered by the user and a set of service information tables. As used herein, a set of service information tables is an ensemble of one or several information tables present in the DVB signal. A set of service information tables is such that at least one of the service information tables of the set contains a list of channels or a list of channel identifiers and at least one of the service information tables of the set contains information determining the physical location in the DVB signal of the channels indicated by the identifiers of the list.

According to the invention, a set of service information tables contains the NIT-other network ID and the bouquet ID if a BAT has to be used.

A SST 800 according to an embodiment of the invention is illustrated on Figure 7. The SST 800 is a table or database comprising parameters. A column 801 of the SST 800 corresponds to a line ID. A column 802 of the SST 800 corresponds to a ZIP-code. A column 803 of the SST 800 corresponds to an identifier of a cablo-operator. A column 804 of the SST 800 corresponds to a bouquet ID. A column 805 of the SST 800 correspond to a network ID, which can be a NIT or a NIT-other. A column 806 of the SST 800 corresponds to a parameter related to the choice of placing the channels in French first in the channel list of the TV. A column 807 of the SST 800 corresponds to a parameter related to the choice of placing the channels in Dutch first in the channel list of the TV. A column 808 of the SST 800 corresponds to a home multiplexing frequency in kHz. A column 809 of the SST 800 corresponds to a home symbol rate in kBd (kilobaud/second). A column 810 of the SST 800 corresponds to a geographical area, typically the name of an administrative district that corresponds to the ZIP-code of column 802. A column 811 of the SST 800 corresponds to a entity linked to the cablo-operator of column 803. For example, a cablo-operator may be a joint-venture of two or more entities and the cable belong to these entities. The column 811 corresponds to these entities that are behind the cablo-operator. A column 812 of the SST 800 corresponds to a NIT-order parameter. Additional columns of the SST 800 may correspond to other parameters. The order of the columns may be modified without departing from the scope of the present invention.

In an embodiment of the invention, only the columns ZIP-code 802, bouquet ID 804 and network ID 805 are present. In other embodiments of the invention, the columns French channels 806 and Dutch channels 807 and/or the column NIT-order 812 are added to the ZIP-code bouquet/network columns.

In an embodiment of the invention, only one ZIP-code, one cablo-operator, one bouquet, one network, one parameter related to the choice of placing the channels in French first in the channel list of the TV, one parameter related to the choice of placing the channels in Dutch first in the channel list of the TV, one home multiplexing frequency, one symbol rate frequency, one area and one entity linked to the cablo-operator is possible by line. In other words, only one value of the parameters exists at a given line and column.

A line in the SST provides to a set of service information tables and information to find the service information tables of said set in the DVB signal.

Line 820 corresponds to a cablo-operator OP2 813 that allocates one or several NIT-other tables to the CVNO. The network column 805 provides the network ID 814 of the allocated NIT-other table. In such a case, the bouquet column 804 may be empty 815 in the lines that correspond to this cablo-operator. If the cablo-operator OP2 813 allocates a single NIT-other to the CVNO, the NIT-order column 812 may be empty 890 in the lines that correspond to this cablo-operator. If the cablo-operator OP2 813 allocates several NIT-others to the CVNO, the NIT-order column 812 may contain a NIT-order parameter in the lines that correspond to this cablo-operator.

Line 821 corresponds to a cablo-operator OP1 816 that allocates one or several bouquets to the CVNO. The bouquet column 804 provides the bouquet ID 817 of the allocated bouquet. In such a case, the network column 805 may provide the network ID 818 corresponding to the ZIP-code 819 and the bouquet ID 817. In an embodiment of the invention, a prefix specific to the CVNO and agreed between the CVNO and the cablo-operator is present in the bouquet ID.

Two lines 822, 823 correspond to a ZIP-code 824 where two cablo-operators are present (like the ZIP-code 540 of Figure 4), one line for each of the cablo-operators. The bouquet ID and network ID of line 822 correspond to the bouquet ID and network ID of operator OP1 and the bouquet ID and network ID of line 823 correspond to the bouquet ID and network ID of operator OP2. In this example, the bouquet ID of OP 2 is empty because OP2 allocates a NIT-other to the CVNO.

Two lines 825, 826 correspond to a ZIP-code 827 where only one cablo-operator OP1 is present with only one bouquet ID 828 and with two networks IDs 829 830. In such a case, a NIT-order number 831, which is different for these two lines, may be added to the two lines, to indicate the order of the lines 825 826, considering that a most relevant set of service information tables is provided by NIT-order number 831 which is either the highest or the lowest.

Two lines 832, 833 correspond to a ZIP-code 834 where only one cablo-operator OP1 is present with two bouquet IDs 835, 836. A network ID 837 corresponds to the bouquet ID 835 and a network ID 838 corresponds to the bouquet ID 836. In such a case, a NIT-order number 839, which is different for these two lines, may be added to the two lines, to indicate the order of the lines 832, 833.

The NIT-order parameter is a ranking parameter. The use of the NIT-order parameter will be explained in more detail later in the application when referring to Figure 11.

In an embodiment of the invention, for OP1 that uses a bouquet, the NIT-order parameter of a line is equal to a rank of the line amongst the lines of identical ZIP-code according with the following rules. Lines corresponding to a higher number of channels may have a higher rank than lines corresponding to a lower number of channels. Lines corresponding to a bouquet at least partly in high definition may have a higher rank than lines corresponding to a bouquet only in standard definition. In an embodiment of the invention, a NIT-order parameter is added in the column NIT order 812 for lines with a bouquet ID and for lines without a bouquet ID, the SST being built in such a way that the lower NIT-order parameter being given to the line which provide the higher possible number of channels.

Instead of using the NIT-order parameter, lines can be ordered in a preference order.

Amongst lines of a same bouquet with different networks, the lines may be ranked by placing the networks by decreasing number of channels. Determining the number of channels (or programmes or services) is performed by sensing the presence of a Program Association Table (PAT) in the DVB signal according to the standard ETSI EN300 468.

In an embodiment of the invention, the parameter related to the choice of placing the channels in one language first in the channel list 840 is the same whatever the cablo-operator and the parameter related to the choice of placing the channels in another language first in the channel list of the TV 841 842 depends on the cablo-operator. In another embodiment, these parameters depend on the cablo-operator. In another embodiment, these parameters do not depend on the cablo-operator.

In an embodiment of the present invention, the SST 800 contains a column with a number indicating the number of local channels per ZIP-code.

Altogether, in an embodiment of the invention, a line corresponds to a unique ensemble of cablo-operator, bouquet ID and network ID that matches with a ZIP-code.

Since all parameters of the SST (operator ID, network ID, bouquet ID, home multiplexing frequency, home symbol rate, parameter related to the placing of languages first in a channel list and a ranking parameter) are related to a network ID (relating to a NIT table or a NIT-other table), a bouquet ID and/or an operator, all parameters are related to groups of channels in the DVB signal.

A NIT-other may be structured in the following way:
- Network ID: 900
   ∘ Table ID: 65
   ∘ Network ID: 900
   ∘ Network name descriptor
   ∘ Transport stream ID:1
      ▪ Original network ID:1
      ▪ Service list descriptor
         - Descriptor tag: 0x41
         - Service: 101
            ∘ Service type: 25 (Advanced codec HD digital TV)
         - Service: 104
         - Service: 105
         - Service: 108
         - Service: 103
      ▪ Cable delivery system descriptor
         - Descriptor tag: 0x44
         - Frequency: 768.0000 MHz
         - Outer FEC: 2 (RS(204/188))
         - Modulation: 5 (256-QAM)
         - Symbol rate 6.8750 Msymbol/s
         - Inner FEC: 0 (not defined)
      ▪ Logical channel descriptor
         - Descriptor tag: 0x83
         - Logical channel: 101
            ∘ Service ID: 101
         - Logical channel: 103
         - Logical channel: 104
         - Logical channel: 105
         - Logical channel: 107
         - Logical channel: 108
      ▪ User-defined descriptor (tag=0x82)
         - 0x82 0x18 0x00 0x65 Oxfc 0x01 0x00 0x68
         - Oxfc 0x02 0x00 0x69 Oxfc 0x03 0x00 0x6b
         - Oxfc 0x04 0x00 0x6c Oxfc 0x05 0x00 0x67
         - Oxfc 0x06
   ∘ Transport stream ID:8
      ▪ [similar information to that for the transport stream of ID 1]
   ∘ Transport stream ID:9
      ▪ [similar information to that for the transport stream of ID 1]
   ∘ [it goes on for other transport streams]

Part of the information is not shown in the list just above to avoid repetition and some numbers are in hexadecimal as will be recognized by the person skilled in the art.

The paragraph cable delivery system descriptor provides the RF parameters associated with the transport stream.

The information found in the paragraph Cable delivery system descriptor (frequency, outer FEC, modulation, symbol rate and inner FEC) is the information required to physically find the transport stream and the channels of the transport stream in the DVB signal.

Each channel is therefore identified by a service ID, which is a channel identifier. Another identifier of a channel is the LCN number of the channel.

The tag 0x82 corresponds to the choice of Dutch as first language for channel list entered by the user and the tag 0x83 corresponds to the choice of French as first language for channel list entered by the user. Therefore, the TV channels will be listed on the television of the user who has chosen Dutch with the list provided in the paragraph user-defined descriptor (Descriptor tag: 0x82) and the TV channels will be listed on the television of the user who has chosen French with the list provided in the paragraph logical channel descriptor (tag=0x83).

A BAT may be structured in the following way:
- Bouquet ID: 257
   ∘ Table ID: 74
   ∘ Bouquet ID: 257
   ∘ Bouquet name descriptor
      ▪ Descriptor tag: 0x47
      ▪ Bouquet name: Mobistar_HD
   ∘ Transport stream ID: 101
      ▪ Original network ID: 1
      ▪ Service list descriptor
         - Descriptor tag: 0x41
         - Service: 10101
         - Service: 10102
         - Service: 10103
         - Service: 10104
         - Service: 10105
         - Service: 10109
         - Service: 10110
         - Service: 10111
         - Service: 10112
         - Service: 10113
         - Service: 10114
         - Service: 10115
         - Service: 10116
         - Service: 10117
         - Service: 10118
         - Service: 10119
         - Service: 10120
         - Service: 10121
      ▪ Logical channel descriptor
         - Descriptor tag: 0x83
         - Logical channel: 101
            ∘ Service ID: 10101
         - Logical channel: 103
         - Logical channel: 9
         - Logical channel: 10
         - Logical channel: 23
         - Logical channel: 81
         - Logical channel: 82
         - [it goes on for all the channels or services]
      ▪ Private data specifier descriptor
         - Descriptor tag: 0x5F
         - Private data specifier: 0x00000AE0
      ▪ User-defined descriptor (tag=0xA0)
         - 0xa0 0x48 0x27 0x75 Oxfc 0x01 0x27 0x76
         - Oxfc 0x03 0x27 0x77 Oxfc 0x6d 0x27 0x78
         - Oxfc 0x6e 0x27 0x79 Oxfc 0x7b 0x27 0x7d
         - Oxfc 0x52 0x27 0x7e Oxfc 0x51 0x27 0x7f
         - Oxfc 0x60 0x27 0x80 Oxfc 0x5f 0x27 0x81
         - Oxfc 0x5c 0x27 0x82 Oxfc 0x59 0x27 0x83
         - Oxfc 0x57 0x27 0x84 Oxfc 0x53 0x27 0x85
         - Oxfc 0x58 0x27 0x86 Oxfc 0x5b 0x27 0x87
         - Oxfc 0x5a 0x27 0x88 Oxfc 0x5e 0x27 0x89
         - Oxfc 0x5d
   ∘ Transport stream ID: 102
      ▪ [similar information to that for the transport stream of ID 101]
   ∘ Transport stream ID: 103
      ▪ [similar information to that for the transport stream of ID 101]
   ∘ [it goes on for other transport streams]

Part of the information is not shown in the list just above to avoid repetition and some numbers are in hexadecimal as will be recognized by the person skilled in the art.

Each channel is therefore identified by a service ID, which is a channel identifier. Another identifier of a channel is the LCN number of the channel.

The tag 0xA0 corresponds to the choice of Dutch as first language for channel list entered by the user and the tag 0x83 corresponds to the choice of French as first language for channel list entered by the user. Therefore, the TV channels will be listed on the television of the user who has chosen French with the list provided in the paragraph logical channel descriptor (Descriptor tag: 0x83) and the TV channels will be listed on the television of the user who has chosen Dutch with the list provided in the paragraph user-defined descriptor (tag=0xA0).

There is no paragraph cable delivery system descriptor because the RF parameters associated with the transport stream will be picked up from the NIT-Other table corresponding to the original network ID provided in the BAT as will be described with reference to Figure 11.

In an embodiment of the invention, the bouquet ID 257 corresponds to the bouquet ID 0x0101 in hexadecimal, whereas the first byte prefix in hexa 0x01 corresponds to a specific CVNO to make the identification of the CVNO easy.

This two-steps process permits to maintain a single definition of each bouquet over all the HFC network with variant according to the Network-ID providing specific RF parameters.

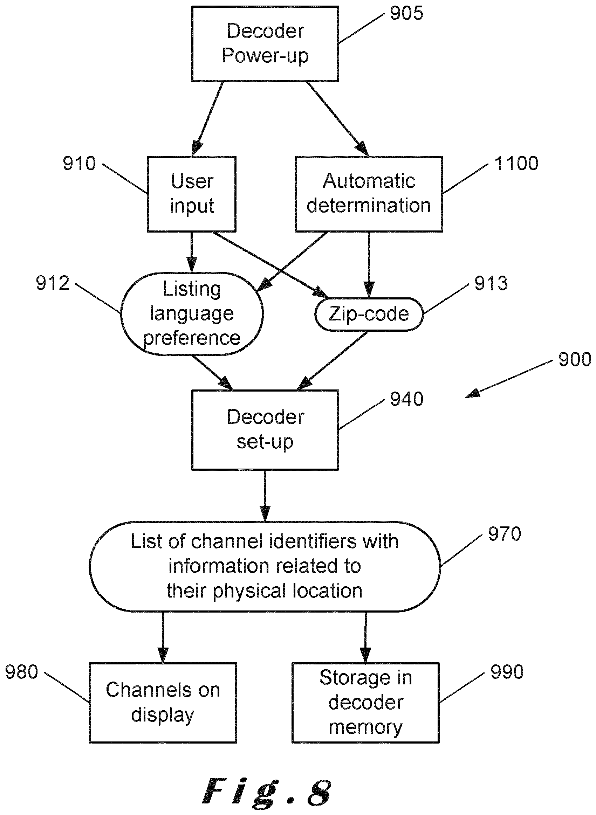

Figure 8 illustrates a sequence 900 of steps corresponding to an installation of a decoder.

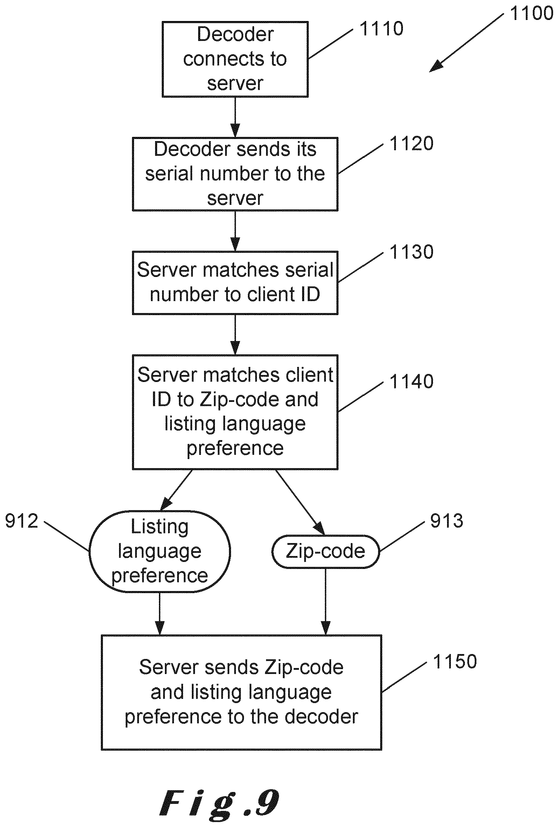

The sequence 900 starts with a power up 905 of the decoder. Then, the sequence 900 includes either a user input 910 of a listing language preference 912 and a ZIP-code 913 or an automatic determination 1100 of a listing language preference 912 and a ZIP-code 913. Both user input 910 and automatic determination 1100 provide the listing language preference 912 of the user and the ZIP-code 913 of the place of the decoder. The automatic determination 1100 is described in more details with reference to Figure 9 further in the application.

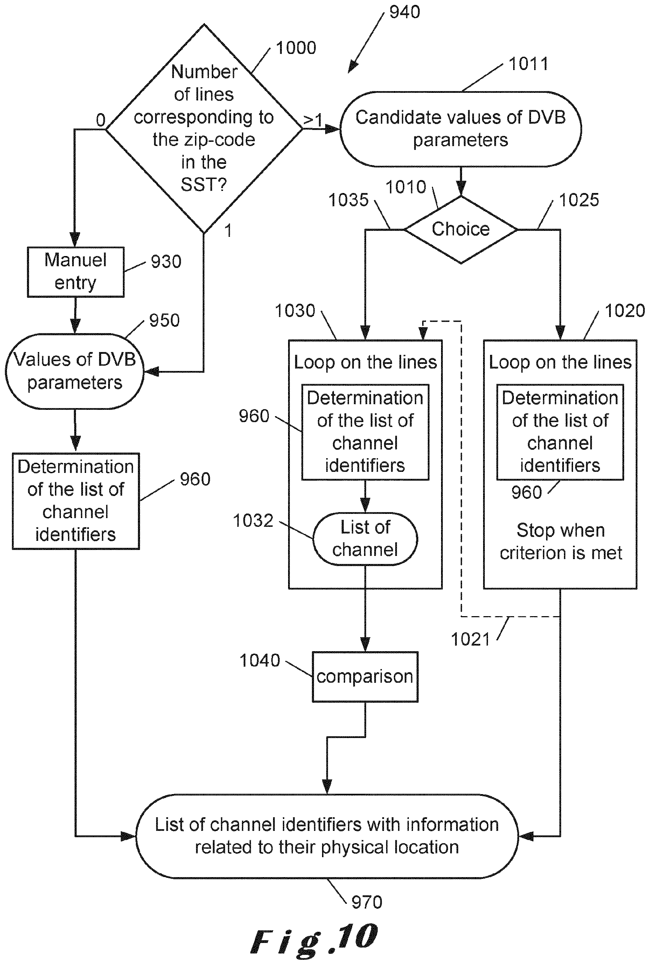

Subsequently, there is a set-up 940 of the decoder that will be described in detail with reference to Figure 10 further in the application. The output of the set-up 940 is a list of channel identifiers 970. And finally, in step 980, the TV channels of the list of channels appear on the display and, in step 990, the list of channel identifiers, with the information required to physically locate the channels in the DVB signal, 970 is stored in the decoder memory 740.

In case of the user input 910 when a user switches on the decoder, a message appears asking the user to enter the ZIP code of the location of the source of DVB signal and the preferred language of the channels. The user inputs 910 can be done on the user interface of the decoder (710 at Figure 6) or via a display remote control. The user input 910 is preferable with respect to the automatic determination 1100 when there is no IP link to the decoder.

The preferred language of the channels determines if it is column 806 or column 807 of the SST that provides the parameter related to the choice of placing the channels in a first language (French for example) or in a second language (Dutch for example) first in the channel list of the display and is the tag that indicates if it is the logical channel descriptor or the user-defined descriptor that is used in the NIT-other or BAT to link the channels and their LCN. The ZIP-code 913 indicates some lines in the SST. These lines are used in the set-up 940 of the decoder as will be described with reference to Figure 10 to determine the list of channel identifiers 970.

In case of the automatic determination 1100, when a user plugs the decoder to a source of DVB signal, the steps illustrated in Figure 9 are taken place. The automatic determination 1100 involves that the decoder is directly or indirectly connected to a remote server, for example via an IP Link. In an embodiment of the invention, the SST 800 is stored in a memory of a server instead of or in addition to being stored in the memory 740 of the decoder 609 (see Figure 6). The automatic determination 1100 is preferable with respect to the user input 910 when there is an IP link to the decoder.

At step 1110, the decoder connects to the server, for example through an internet connection. This connection can use an IP-link. At step 1120, the decoder sends it serial number, or another number making possible for the server to identify it, to the server. At step 1130, the server matches the serial number of the decoder to a client identifier, by looking in a database matching client identifiers and decoder serial numbers. At step 1140, the server determines, based on the client identifier, the ZIP-code 913 and the listing language preference 912, by looking in a database matching client identifiers with ZIP-codes and the listing language preferences. The ZIP-code 913 and the listing language preference 912 were for example provided by the user (or client) when he bought the decoder to build that database. At step 1150, the server sends the ZIP-code and the listing language preference to the decoder, for example through internet. The user might be asked to confirm his ZIP-code and listing language.

In an embodiment of the invention, the SST or an updated version of the SST is stored in the server. When the decoder connects to server 1110, the SST or its updated version is downloaded from the server by the decoder.

In an embodiment of the invention, the SST or an updated version of the SST is stored in the cloud. When the decoder connects to the cloud, the SST or its updated version is downloaded from the cloud by the decoder.

Figure 10 illustrates in further details the decoder set-up 940 referred to in figure 8. The decoder checks (step 1000) the number of lines in the SST that correspond to the ZIP-code 913. If the number of lines in the SST that correspond to the ZIP-code is equal to zero, a manual entry 930 of values of DVB parameters is performed by the user. Values 950 of DVB parameters are therefore obtained from the manual entry 930. A determination 960 of the list of channel identifiers is then performed in accordance with the values 950. The determination 960 of the list of channel identifiers is then performed by the method illustrated by Figure 11, in accordance with the values 950. From the determination of the list of channel identifiers 960, a list of channel identifiers 970 to be displayed are identified from tables (BAT, NIT, NIT-others or other service information tables) present in the DVB signal.

If the number of lines in the SST that correspond to the ZIP-code is equal to one, the values 950 of the DVB parameters are provided by that line. The determination of the list of channel identifiers 960 of the DVB signal is then performed either by the method illustrated by Figure 11, in accordance with the values 950.

If the number of lines in the SST that correspond to the ZIP-code is strictly higher than one, each line of the SST that correspond to the ZIP-code provides candidate values of DVB parameters 1011. Amongst all the lines that correspond to the ZIP-code, one has to be selected to provide DVB parameters that will lead to the list of channels to be displayed. The line that provides the DVB parameters lead to the list of channels to be displayed corresponds to a most relevant set of service information tables.

Then, a choice 1010 between several options is made according to predetermined criteria as will be described below.

According to a first option 1035, a first loop 1030 on the lines of the SST is performed. The first option 1035 may be preferably selected in the case where there is only one cablo-operator for the ZIP-code. In the first loop 1030, all the lines of the SST corresponding to the ZIP-code are considered one after each other. The determination 960 of the list of channel identifiers is performed with the values of the DVB parameters provided by the considered line. If a list of channels is obtained by the determination 960, channels 1032 corresponding to the considered line are kept in the memory of the decoder. After the first loop 1030, a comparison 1040 compares the number of channels for each considered line and the line that has provided the higher number of channels 1032 is considered as providing the list of channel identifiers 970.

According to a second option 1025, a second loop 1020 on the lines of the SST corresponding to the ZIP-code is performed. The second option 1025 may be preferably taken where there are at least two cablo-operators in the SST lines corresponding to the ZIP-code. In the second loop 1020, the lines of the SST corresponding to the ZIP-code are considered one after each other. At every increment of the second loop 1020, the determination 960 of the list of channel identifiers is performed with the values of the DVB parameters provided by the considered line. If the considered line provides values of the DVB parameters for which the determination 960 does not fulfill a given criterion, the second loop 1020 considers a next line. If the considered line provides values of the DVB parameters for which the determination 960 fulfills a given criterion, the second loop 1020 stops without considering a next line. The channels of the list of channel identifiers 970 are those provided by the last determination 960 of the list of channel identifiers of the second loop 1020.

Optionally 1021, after the second loop 1020, the decoder set-up 940 may include one or several iterations of the first loop 1030.

The first option 1035, with the loop 1030, the second option 1025, with the loop 1020, as well as the combination of loops 1020 and 1030, are methods to select the most relevant set of service information tables amongst the sets provided by the candidate values of DVB parameters 1011.

In case the number of lines corresponding to the ZIP-code in the SST is zero at step 1000, a message appears to the user to indicate that the user has to perform the manual entry 930 of the values of the DVB parameters. This situation is unlikely since the SST includes lines corresponding to all the ZIP-codes of the country where the decoder is sold. If it however happens, the user has to find at several places (in the decoder manual, in the internet, in the contract with the CVNO, calling to the CVNO call-center...) and to enter in the decoder the values of at least the following DVB parameters:
- the name (or an identifier) of the cablo-operator.
- an information indicating that the list of channels is present in a NIT-other or a BAT,
- the parameter related to the choice of placing the channels in French/Dutch first in the channel list of the TV,
- the network ID (corresponding to a NIT-other in case the agreement 161 between the cablo-operator 111 and the CVNO 13 is that the CVNO 13 stores his list of channels in a NIT-other),
- the bouquet ID in case a bouquet is used because the agreement 162 between the cablo-operator 112 and the CVNO 13 is that the CVNO 13 stores his list of channels in a BAT,
- the home multiplexing frequency, and
- the home symbol rate.

If the number of lines corresponding to the ZIP-code in the SST is equal to one at step 1000, the decoder automatically reads the values 950 of the DVB parameters (parameter related to the choice of placing the channels in French first in the channel list of the TV, network ID, bouquet ID in case a bouquet is used, home multiplexing frequency and home symbol rate and optionally name of the cablo-operator owning the TV cables at the user location) in that single line. The determination 960 of the list of channel identifiers is then performed with values of DVB parameters 950 corresponding to that single line.

If the number of lines corresponding to the ZIP-code in the SST is strictly higher than one at step 1000, the candidate values of DVB parameters are found in the lines of the SST corresponding to the ZIP-code. The decoder performs an automatic determination of the line in the SST that brings the most relevant set of service information tables, said most relevant set including the table(s) with the list of channels to be displayed.

After the identification of the lines corresponding to the ZIP-code in the SST, the choice 1010 is made between two options 1025, 1035. A possible criterion for this choice 1010 is the number of cablo-operators in the lines corresponding to the ZIP-code in the SST table. Another possible criterion is the name(s) of the cablo-operator(s). The first option 1035 is preferably selected in the case where there is only one cablo-operator for the ZIP-code. If the SST is such that a single line corresponds to a ZIP-code and a cablo-operator that does not use a bouquet, the one cable-operator for the considered ZIP-code is a cablo-operator that uses a bouquet (OP1 in Figure 7). This is the case for lines 832, 833 of Figure 7 for example. The decoder performs the first loop 1030 on the lines corresponding to the ZIP-code. The decoder considers first the line where the number in the NIT-order column 812 is equal to 1. The decoder may, alternatively, considers first the first line if the lines are ordered in a preference order. The decoder performs a determination 960 of the list of channel identifiers on the DVB signal to find a BAT of bouquet ID equal to the bouquet ID of the line at the home multiplexing frequency of the line and at the home symbol rate of the line and a NIT corresponding with a network ID equal to the network ID of the line at the home multiplexing frequency of the line and at the home symbol rate of the line. From the determination 960 of the list of channel identifiers, the decoder gets the channels 1032 common to the BAT list and the NIT list. In a next increment of the first loop 1030, the decoder considers the line where the number in the NIT-order column 812 is equal to 2, or the second line, and performs a determination 960 of the list of channel identifiers on the DVB signal to find a BAT of bouquet ID equal to the bouquet ID of the line at the home multiplexing frequency of the line and at the home symbol rate of the line and a NIT with a network ID equal to the network ID of the line at the home multiplexing frequency of the line and at the home symbol rate of the line. From the determination 960 of the list of channel identifiers, the decoder gets the channels 1032 common to the BAT list and the NIT list. The decoder performs similar determination 960 of the list of channel identifiers and determination of the channels 1032 common to the BAT list and the NIT list for every line of same ZIP-code, taking the lines by order of NIT-order parameter provided by column 812 or by order as presented in the SST.

The decoder performs the comparison 1040 between the number of channels common to the BAT list and the NIT list for every line of same ZIP-code and the line in the SST corresponding to the maximum number of channels common to the BAT list and the NIT list provides the DVB parameters that lead to the most relevant set of service information tables, which set itself provides the list of channel identifiers 970.

The second loop 1020 is automatically performed whatever the number of lines in the SST corresponding to the ZIP-code. The first loop 1030 and the comparison 1040 are automatically performed whatever the number of lines in the SST corresponding to the ZIP-code.

The second option 1025 is preferably taken where there are at least two cablo-operators in the SST lines corresponding to the ZIP-code. The SST lines corresponding to the ZIP-code are considered one by one in the second loop 1020. In the embodiment corresponding to Figure 7, the decoder considers first a line where the cablo-operator is OP 2 that does not use a bouquet and uses a single network ID for the NIT-other. The determination 960 of the list of channel identifiers of the DVB signal received from the DVB signal source is performed by the decoder to find a NIT or NIT-other for a network of ID equal to the network ID at the home multiplexing frequency and at the home symbol rate provided by the line in the SST corresponding to the ZIP-code and OP 2. If after a predetermined time, for example a time of 10 seconds defined by the DVB standard, the decoder has found a NIT or NIT-other corresponding to these parameters, the considered line in the SST provides the values of the DVB parameters that lead to the most relevant set of service information tables, which set itself provides the list of channel identifiers 970. If not, the second loop 1020 considers a line of the cablo-operator OP1 and the determination 960 of the list of channel identifiers of the DVB signal received from the DVB signal source is performed by the decoder to find - a bouquet of ID equal to the provided bouquet ID at the provided home multiplexing frequency and at the provided home symbol rate, and to find a NIT with a network of ID equal to the provided network ID at the provided home multiplexing frequency and at the provided home symbol rate. If after a predetermined time, for example a time of 10 seconds defined by the DVB standard, the decoder has found a BAT and a NIT or NIT-other corresponding to these parameters, the considered line in the SST provides the values of the DVB parameters that lead to the most relevant set of service information tables, which set itself provides the list of channel identifiers 970.

The criterion to stop the second loop 1020 is thus that the set of service information tables corresponding to the DVB parameters has been found.

Optionally, the second loop 1020 may consider the lines corresponding to the ZIP-code in the SST according to their NIT-order number, starting at 1 and increasing. The decoder may, alternatively, considers first the first line if the lines are ordered in a preference order. Like that, if the lines are ranked with decreasing preference, a preferred line will be considered in the second loop 1020 before a less preferred line. This can be done for example by ranking a line for a list of channels including HD channels higher than a line for a list of channels including only SD channels, or ranking a line with for a larger list of channels higher than a line with a lower list of channels.

If there are more than two cablo-operators, the same process is performed for every cablo-operator. In an embodiment of the invention, if there are more than one line for an operator, the second loop 1020 is performed on the lines, line by line, of the SST for said operator.

The first option 1035 is chosen in case several lines correspond to the same operator. All the lines are considered in the loop 1030 and the line and at the comparison 1040, the line that has provided the higher number of channels 1032 is considered as providing the list of channel identifiers 970.

The second option 1025 is chosen in case several operators OP1, OP2 are present for the ZIP-code in column 803 of the SST 800. The presence of the NIT-other of a given network ID corresponding to OP2, and provided by the line in the SST corresponding to OP2, is checked 960 for preferably 10 second. If a NIT-other of the given network ID is detected in the DVB signal, the loop 1030 stops and the list of channels is provided by the NIT-other of the given network ID. If no NIT-other of the given network ID is detected in the DVB signal, the loop 1030 considers the lines of the SST corresponding to OP1.In an embodiment of the invention, in case a same ZIP-code corresponds to lines where OP2 appears once and OP1 appears several times, the SST is built in such a way that the line for OP2 appears first. The second option 1025 is preferably chosen. The 1020 is performed in such a way that it considers the lines in the SST in the order they appear and therefore considers first the line for OP2. If after 10 seconds, no NIT-other of the network ID provided by the line for OP2 is found in the DVB signal, the set-up 940 according to the invention follows the arrow 1021 and performs the loop 1030 on the lines corresponding to OP1.

Figure 11 illustrates a way 960B to perform the determination of the list of channel identifiers 960 according to the present invention.

Referring to Figure 11, using as inputs the values of the DVB parameters 950 provided by the considered SST line or by the manual entry of the user, which include a NIT-other ID 955, a BAT ID 956, a home multiplexing frequency 957, a home symbol rate 958 and preferably a LCN 959, the decoder performs a searching 971 in the DVB signal for the set of service information tables, which in this case consists in the NIT-other identified by the NIT-other ID 955 and the BAT identified by the BAT ID 956. More specifically, the searching 971 tries to find a NIT-other with a network ID equal to the network ID 955 and a BAT with a bouquet ID equal to the bouquet ID 956, at the home multiplexing frequency 957 and at the home symbol rate 959.

From the searching 971, a set 956B of service information tables, which consists here in the NIT-other 975 identified by the NIT-other ID 955 and in the BAT 972 identified by the bouquet ID 956, is obtained.

A reading 973 is then performed, which is the reading of the list of channel identifiers in the BAT 972. In the example of BAT provided above with bouquet ID 257, the reading 973 reads, for each transport stream, the numbers in front of "service:" found in the paragraph service list descriptor. It may also make a link between the channels and the channels found in the paragraph identified by a tag equal to the LCN 959.

The reading 973 preferably involves an arrangement of the channels in order to sort them according to the language provided by the LCN 959.

The reading 973 results in the list of channel identifiers 974.

A reading 976 is then performed, which is the reading, in the NIT-other 975, of the information related the physical location in the DVB signal of the channels of the list 974. The reading 976 makes correspond the channels of the list 974 to the RF parameters associated with the transport stream, which is information related to the physical location in the encoded video signal of the channels.

If the list of channels 973 provided by the BAT contains only part of the channels of the list of channels provided by the NIT-other 975, the channels corresponding to the BAT list 973 are selected in the NIT-other 975 and if the list 973 of provided by the BAT contains channels that are not in the list of channels provided by the NIT-other 975, the channels corresponding to the BAT list 973 that are not in NIT-other are dropped. This is a filtering of the channels performed by using the highest number of channels present in both the specific BAT and the associated NIT-Other.

The reading 976 may involve a PAT scanning validation the PAT (Program Association Table) indicating the presence or the absence of a channel on the transponder connected to the cables. In an embodiment of the invention, the genuine presence of some local channels is sensed by the decoder through PAT identification.

The reading 976 results in the list of channel identifiers 970 with information related to their physical location on the DVB signal.

The determination process of the channels, channel LCN and channel physical location parameters according to the invention provides a high robustness against DVB signalling inconsistency and provides an automatic channel ordering between French and Dutch.

Since the list of channels, with their LCN and the information required to physically locate the channel in the DVB signal (obtained from the NIT or the NIT-other) are stored in the non-volatile memory of the decoder, a next time the user uses his decoder, he does not have to enter his ZIP-code or list language preference again.

In an embodiment of the invention, the SST is updated by System Software Upgrade (SSU) Over The Air (OTA) upgrade, Universal Serial Bus (USB) upgrade or IP-link upgrade. In an embodiment of the invention, the SST is updated during firmware upgrade. In an embodiment of the invention, the SST update does not compromise the security level of the decoder. In an embodiment of the invention, if an updated version is available on the back-office server, the STB wills store the new SST table in NVRAM.

The SST is such that any variation of transport stream ID, frequency multiplexing setting, packet ID (PID) value, service ID, BAT, NIT, NIT-other does not require to modify the SST or the NIT-other created for the CVNO 13.

A change of network ID per ZIP-code or bouquet ID per ZIP-code is implemented in the SST in the following way. A line in the SST indicates for each column if this column is active or inactive (not shown). A change of network ID per ZIP-code or bouquet ID per ZIP-code is performed by adding an active column with the new values and setting the former column as inactive. In an embodiment of the invention, the decoder looks only at active columns. In an embodiment of the invention, the decoder looks at columns according to their position without taking care of the active status. The activity status of a column makes possible that a new table with new column is backward compatible. A status may be a version number associated to a new column.

The present invention provides a decoder usable with various cablo-operators or different specifications within one cablo-operator. The present invention provides a decoder that automatically handles cases like ZIP-codes corresponding to more than one cablo-operators, more than one networks and/or more than one bouquets,... The present invention provides an automatic channel selection per zip code based either scanning of a NIT-other or correlation between BAT and NIT. The present invention avoids duplication of channels in different formats (HD, SD and possibly Ultra HD). The present invention provides a decoder easy to install.

In an embodiment of the invention, the SST is a database. In an embodiment of the invention, the SST is coded in XML, CSV,... The exact implementation of the SST may be chosen by the decoder manufacturer to obtain a quick look-up and occupy a small space in the decoder memory.

The invention has mainly been disclosed by reference to cablo-operators and DVB signal through cables. In an embodiment, the invention can be used with DVB signal through terrestrial communication, satellite communication or a combination of cable, terrestrial and satellite communication. Column 803 of Figure 7 indicates an identifier for the operator and an additional column can indicate the nature of the operation, i.e., cablo-operator, terrestrial operator, satellite operator or a mix thereof. As used herein, an operator, if not a CVNO, is the owner of the transmission medium.

## Claims

1. A method for automatically determining a list (970) of identifiers of channels, the channels being to be displayed on a display device (611), the method being performed by a data processing device (730) included in a decoder (609) comprising a memory (740) storing a database (800) comprising ZIP-codes (802) and values of parameters (803-812) indicating sets (956A, 956B) of service information tables (962, 972), the decoder (609) being connected to a source of DVB signal (606) and to the display device (611);
the method comprising the steps of:
(i) the data processing device (730) receives a ZIP-code (802, 913) from a user,
(ii) the data processing device (730) determines the parameter values (803-812) that correspond to the ZIP-code (802) in the database (800), said parameters values (803-812) being in a line of the database (800) that corresponds to said ZIP-code (802), said line providing an indication of a set (956A, 956B) of service information tables with information to find the service information tables of said set (956A, 956B) in the DVB signal, and including DVB parameters (950) which are a Network Information Table-other Identifier, NIT-other ID (805, 955), a Bouquet Association Table Identifier, a BAT ID (804, 956), a home multiplexing frequency (808, 957), and a home symbol rate (809, 958), the service information tables of said set (956A, 956B) being a NIT-other and a BAT, and
(iii) the data processing device (730) determines (960) the list (970) of identifiers of channels to be displayed from said indication;
wherein step (iii) includes the following steps:
a) using as inputs the DVB parameters (950), the data processing device (730) performs a searching (971) in the DVB signal for the set (956A, 956B) of service information tables, which consists in the NIT-other identified by the NIT-other ID (955) and the BAT identified by the BAT ID (956), in order to find a NIT-other with a network ID equal to the NIT-other ID (955) and a BAT with a bouquet ID equal to the BAT ID (956), at the home multiplexing frequency (957) and at the home symbol rate (959); from the searching (971), the set (956B) of service information tables, which consists in the NIT-other (975) identified by the NIT-other ID (955) and in the BAT (972) identified by the BAT ID (956), is obtained;
b) the data processing device (730) performs a reading (973) of a list of channel identifiers in the BAT (972), the reading (973) resulting in the list of channel identifiers (974) of the BAT (972); and
c) the data processing device (730) performs a reading (976) in the NIT-other (975), of the information related to the physical location in the DVB signal of the channels of the list of channel identifiers (974) of the BAT (972), to make correspond the channels of the list (974) of the BAT (972) to RF parameters associated with the transport stream,
wherein the reading (976) in the NIT-other (975) results in the list of channel identifiers (970) with information related to their physical location on the DVB signal,
wherein if the list of channel identifiers (974) of the BAT contains only part of the channels of the list of channel identifiers provided by the NIT-other (975), the channels corresponding to the list of channel identifiers (974) of the BAT are selected in the NIT-other (975); and if the list of channel identifiers (974) of the BAT contains channels that are not in the list of channel identifiers provided by the NIT-other (975), the channels of the BAT that are not in NIT-other are dropped, and
wherein the reading (976) in the NIT-other (975) involves a validation of the presence or the absence of channels by scanning a Program Association Table, PAT, present in the DVB signal.

2. A method according to claim 1, wherein step (i) includes receiving the ZIP-code through a user interface (710).

3. A method according to any of the preceding claims, further including receiving data corresponding to a choice of language for channel listing, wherein the parameter values corresponding to the ZIP-code include a parameter value related to the choice of language for channel listing, and wherein the determining of (960) of the list of identifiers of channels includes an arrangement of the identifiers of channels in accordance with the choice of language for channel listing.

4. A non-transitory computer readable medium (740) storing a program for causing a data processing device (730) to execute the method according to any one of the preceding claims.

5. A decoder (609) connected to a source (608) of DVB signal and a display (611), the decoder (609) comprising a data processing device (730) and a memory (740) storing a database (800), the database comprising ZIP-codes and values of parameters indicating sets (956A, 956B) of service information tables, wherein the data processing device (730) is configured to execute the method according to claims 1 to 3.

## Patentansprüche

1. Verfahren zum automatischen Ermitteln einer Liste (970) von Kanalkennungen, wobei die Kanäle auf einer Anzeigevorrichtung (611) angezeigt werden, wobei das Verfahren von einer Datenverarbeitungsvorrichtung (730) durchgeführt wird, die in einem Decodierer (609) beinhaltet ist, der einen Speicher (740) umfasst, der eine Datenbank (800) speichert, die Postleitzahlen (802) und Parameterwerte (803-812), die Sätze (956A, 956B) von Dienstinformationstabellen (962, 972) angeben, umfasst, wobei der Decodierer (609) mit einer DVB-Signalquelle (606) und mit der Anzeigevorrichtung (611) verbunden ist;
das Verfahren umfassend die folgenden Schritte:
(i) die Datenverarbeitungsvorrichtung (730) empfängt eine Postleitzahl (802, 913) von einem Anwender,
(ii) die Datenverarbeitungsvorrichtung (730) ermittelt die Parameterwerte (803-812), die der Postleitzahl (802) in der Datenbank (800) entsprechen, wobei die Parameterwerte (803-812) in einer Zeile der Datenbank (800) sind, die der Postleitzahl (802) entspricht, wobei die Zeile eine Angabe eines Satzes (956A, 956B) von Dienstinformationstabellen mit Informationen, um die Dienstinformationstabellen des Satzes (956A, 956B) in dem DVB-Signal zu finden, bereitstellt und DVB-Parameter (950) beinhaltet, die eine Netzwerkinformationstabellenandere Kennung, NIT-andere ID (805, 955), eine Bouquetzuordnungstabellenkennung, eine BAT-ID (804, 958), eine Heimmultiplexfrequenz (808, 957) und eine Heimsymbolrate (809, 958) sind, wobei die Dienstinformationstabellen des Satzes (956A, 956B) eine NIT-andere und eine BAT sind, und
(iii) die Datenverarbeitungsvorrichtung (730) die Liste (970) von Kennungen von Kanälen, die von der Angabe anzuzeigen sind, ermittelt (960);
wobei Schritt (iii) die folgenden Schritte beinhaltet:
a) unter Verwendung der DVB-Parameter (950) als Eingänge führt die Datenverarbeitungsvorrichtung (730) eine Suche (971) in dem DVB-Signal nach dem Satz (956A, 956B) von Dienstinformationstabellen, der aus der NIT-andere, die von der NIT-andere ID (955) identifiziert wird, und der BAT, die von der BAT-ID (956) identifiziert wird, besteht, bei der Heimmultiplexfrequenz (957) und bei der Heimsymbolrate (959) aus, um eine NIT-andere mit einer Netzwerk-ID gleich der NIT-andere ID (955) und eine BAT mit einer Bouquet-ID gleich der BAT-ID (956) zu finden; durch die Suche (971) wird der Satz (956B) von Dienstinformationstabellen erhalten, der aus der NIT-andere (975), die von der NIT-andere ID (955) identifiziert wird, und aus der BAT (972), die von der BAT-ID (956) identifiziert wird, besteht;
b) die Datenverarbeitungsvorrichtung (730) führt ein Lesen (973) einer Liste von Kanalkennungen in der BAT (972) durch, wobei das Lesen (973) in der Liste von Kanalkennungen (974) der BAT (972) resultiert; und
c) die Datenverarbeitungsvorrichtung (730) führt ein Lesen (976) in der NIT-andere (975) der Informationen bezüglich des physischen Orts in dem DVB-Signal der Kanäle der Liste von Kanalkennungen (974) der BAT (972) durch, um die Kanäle der Liste (974) der BAT (972) RF-Parametern entsprechen zu lassen, die dem Beförderungsstrom zugeordnet sind,
wobei das Lesen (976) in der NIT-andere (975) in der Liste von Kanalkennungen (970) mit Informationen bezüglich ihres physischen Orts auf dem DVB-Signal resultiert,
wobei, falls die Liste von Kanalkennungen (974) der BAT nur einen Teil der Kanäle der Liste von Kanalkennungen enthält, die von der NIT-andere (975) bereitgestellt wird, werden die Kanäle entsprechend der Liste von Kanalkennungen (974) der BAT in der NIT-andere (975) ausgewählt; und falls die Liste von Kanalkennungen (974) der BAT Kanäle enthält, die nicht in der Liste von Kanalkennungen sind, die von der NIT-andere (975) bereitgestellt wird, werden die Kanäle der BAT, die nicht in der NIT-andere sind, verworfen, und
wobei das Lesen (976) in der NIT-andere (975) eine Prüfung der Gegenwart oder der Abwesenheit von Kanälen einbezieht, indem eine Programmzuordnungstabelle, PAT, durchsucht wird,
die in dem DVB-Signal vorhanden ist.

2. Verfahren nach Anspruch 1, wobei Schritt (i) Empfangen der Postleitzahl durch eine Anwenderschnittstelle (710) beinhaltet.

3. Verfahren nach einem der vorstehenden Ansprüche, weiter beinhaltend Empfangen von Daten, die einer Sprachauswahl zur Kanalauflistung entsprechen, wobei die Parameterwerte, die der Postleitzahl entsprechen, einen Parameterwert bezüglich der Sprachauswahl zur Kanalauflistung beinhalten und wobei das Ermitteln (960) der Liste von Kennungen von Kanälen eine Anordnung der Kanalkennungen in Übereinstimmung mit der Sprachauswahl zur Kanalauflistung beinhaltet.

4. Nichttransitorisches computerlesbares Medium (740), das ein Programm zum Veranlassen einer Datenverarbeitungsvorrichtung (730) speichert, das Verfahren nach einem der vorstehenden Ansprüche auszuführen.

5. Decodierer (609), der mit einer Quelle (608) vom DVB-Signal und einer Anzeige (611) verbunden ist, wobei der Decodierer (609) eine Datenverarbeitungsvorrichtung (730) und einen Speicher (740), der eine Datenbank (800) speichert, umfasst, wobei die Datenbank Postleitzahlen und Parameterwerte, die Sätze (956A, 956B) von Dienstinformationstabellen angeben, umfasst, wobei die Datenverarbeitungsvorrichtung (730) konfiguriert ist, das Verfahren nach einem der Ansprüche 1 bis 3 auszuführen.

## Revendications

1. Procédé pour déterminer automatiquement une liste (970) d'identifiants de canaux, les canaux étant destinés à être affichés sur un dispositif d'affichage (611), le procédé étant réalisé par un dispositif de traitement de données (730) inclus dans un décodeur (609) comprenant une mémoire (740) stockant une base de données (800) comprenant des codes ZIP (802) et des valeurs de paramètres (803-812) indiquant des ensembles (956A, 956B) de tables d'informations de service (962, 972), le décodeur (609) étant connecté à une source de signal de diffusion DVB (606) et au dispositif d'affichage (611) ;
le procédé comprenant les étapes :
i) le dispositif de traitement de données (730) reçoit un code ZIP (802, 913) d'un utilisateur,
ii) le dispositif de traitement de données (730) détermine les valeurs de paramètre (803-812) qui correspondent au code ZIP (802) dans la base de données (800), lesdites valeurs de paramètre (803-812) étant dans une ligne de la base de données (800) qui correspond au dit code ZIP (802), ladite ligne fournissant une indication d'un ensemble (956A, 956B) de tables d'informations de service présentant des informations pour trouver les tables d'informations de service dudit ensemble (956A, 956B) dans le signal de diffusion DVB, et incluant des paramètres de diffusion DVB (950) qui sont un identifiant d'autre table d'informations de réseau, ID d'autre table NIT (805, 955), un identifiant de table d'association de bouquet, un ID de table BAT (804, 956), une fréquence de multiplexage domestique (808, 957) et un débit de symboles domestique (809, 958), les tables d'informations de service dudit ensemble (956A, 956B) étant une autre table NIT et une table BAT et
iii) le dispositif de traitement de données (730) détermine (960) la liste (970) d'identifiants de canaux à afficher à partir de ladite indication ;
dans lequel l'étape (iii) inclut les étapes suivantes :
a) à l'aide, comme entrées, des paramètres de diffusion DVB (950), le dispositif de traitement de données (730) effectue une recherche (971) dans le signal de diffusion DVB pour l'ensemble (956A, 956B) de tables d'informations de service, qui se compose de l'autre table NIT identifiée par l'ID d'autre table NIT (955) et de la table BAT identifiée par l'ID de table BAT (956) afin de trouver une autre table NIT avec un ID de réseau égal à l'ID d'autre table NIT (955) et une table BAT avec un ID de bouquet égal à l'ID de table BAT (956) à la fréquence de multiplexage domestique (957) et au débit de symboles domestique (959) ; à partir de la recherche (971), l'ensemble (956B) de tables d'informations de service, qui se compose de l'autre table NIT (975) identifiée par l'ID d'autre table (955) et de la table BAT (972) identifiée par l'ID de table BAT (956), est obtenu ;
b) le dispositif de traitement de données (730) effectue une lecture (973) d'une liste d'identifiants de canal dans la table BAT (972), la lecture (973) ayant pour résultat la liste d'identifiants de canal (974) de la table BAT (972) ; et
c) le dispositif de traitement de données (730) effectue une lecture (976) dans l'autre table NIT (975) des informations se rapportant à l'emplacement physique dans le signal de diffusion DVB des canaux de la liste d'identifiants de canal (974) de la table BAT (972) pour faire correspondre les canaux de la liste (974) de la table (972) à des paramètres RF associés au flux de transport,
dans lequel la lecture (976) dans l'autre table NIT (975) a pour résultat la liste d'identifiants de canal (970) présentant des informations se rapportant à leur emplacement physique sur le signal de diffusion DVB,
dans lequel, si la liste d'identifiants de canal (974) de la table BAT contient seulement une partie des canaux de la liste d'identifiants de canal fournie par l'autre table NIT (975), les canaux correspondant à la liste d'identifiants de canal (974) de la table BAT sont sélectionnés dans l'autre table NIT (975) ; et si la liste d'identifiants de canal (974) de la table BAT contient des canaux qui ne sont pas dans la liste d'identifiants de canal fournie par l'autre table NIT (975), les canaux de la table BAT qui ne sont pas dans l'autre table NIT, sont omis et
dans lequel la lecture (976) dans l'autre table NIT (975) implique une validation de la présence, ou de l'absence, de canaux en balayant une table d'association de programme, PAT présente dans le signal de diffusion DVB.

2. Procédé selon la revendication 1, dans lequel l'étape (i) implique la réception du code ZIP au moyen d'une interface utilisateur (710).

3. Procédé selon l'une quelconque des revendications précédentes, incluant en outre la réception de données correspondant à un choix de langue pour une liste de canaux, dans lequel les valeurs de paramètre correspondant au code ZIP incluent une valeur de paramètre se rapportant au choix de langue pour une liste de canaux et dans lequel la détermination (960) de la liste d'identifiants de canaux inclut un agencement des identifiants de canaux selon le choix de langue pour une liste de canaux.

4. Support non transitoire lisible par ordinateur (740) stockant un programme pour amener un dispositif de traitement de données (730) à exécuter le procédé selon l'une quelconque des revendications précédentes.

5. Décodeur (609) connecté à une source (608) d'un signal de diffusion DVB et à un dispositif d'affichage (611), le décodeur (609) comprenant un dispositif de traitement de données (730) et une mémoire (740) stockant une base de données (800), la base de données comprenant des codes ZIP et des valeurs de paramètres indiquant des ensembles (956A, 956B) de tables d'informations de service, dans lequel le dispositif de traitement de données (730) est configuré pour exécuter le procédé selon les revendications 1 à 3.
